# EUROPEAN PATENT APPLICATION

(11) **EP 4 273 790 A1**
(43) Date of publication of application: **08.11.2023**
(21) Application number: 20967850.7
(22) Date of filing: 31.12.2020
(51) Int. Cl.: G06T 3/40, G06T 5/00

(54) **IMAGE STITCHING METHOD AND APPARATUS, AND COMPUTER-READABLE MEDIUM**

(71) Applicant: Siemens Aktiengesellschaft, 80333 München (DE)
(72) Inventor: WANG, Bowen, Jining, Shandong 272075 (CN)
(74) Representative: Isarpatent
(86) International application number: PCT/CN2020/142401
(87) International publication number: WO 2022/141512

(57) **Abstract**

The embodiments of the present invention relate to image processing technology, and in particular to an image stitching method and apparatus, and a computer-readable medium. The method comprises: acquiring the current frame of a first picture photographed by a first camera and the current frame of a second picture photographed by a second camera, wherein there is an overlap between photographed regions in the first picture and the second picture; determining whether a first condition is met, the first condition referring to: when the current frame and previous frame of pictures are photographed, a relative position relationship between the first camera and the second camera remaining unchanged; if the first condition is met, acquiring a first projection transformation parameter used when projection transformation is performed on the previous frame of a third picture photographed by the first camera, and a second projection transformation parameter used when projection transformation is performed on the previous frame of a fourth picture photographed by the second camera; and fusing the first picture and the second picture, wherein projection transformation is performed on the first picture by using the first projection transformation parameter, and projection transformation is performed on the second picture by using the second projection transformation parameter.

## Description

### Technical Field

The present invention relates to the technical field of image processing, and in particular to an image stitching method, an image stitching apparatus and a computer-readable medium.

### Background Art

A closed circuit television (CCTV) system is a video data transmission system, wherein video data is transmitted in a fixed circuit. Cameras, displays and recording devices are directly connected in a CCTV system. One of the most common applications of CCTV systems is a security camera system, which may be widely applied in retail stores, banks, government organizations, or even household environments.

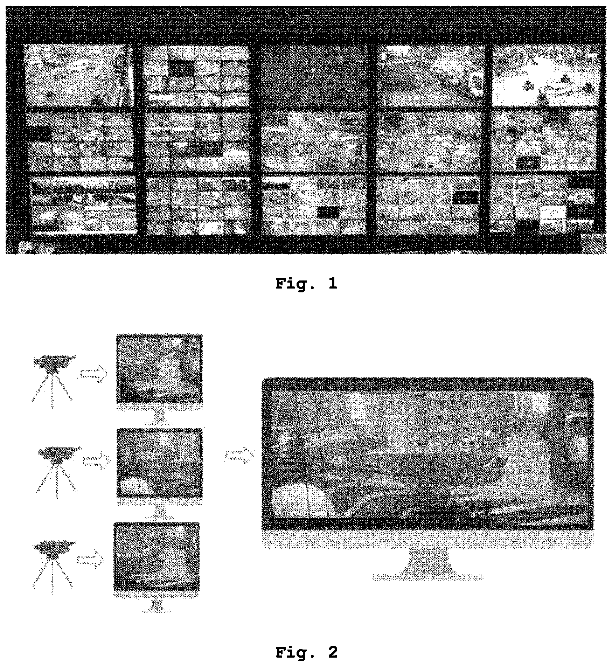

However, a plurality of channels of videos will simultaneously be displayed on a monitor wall (as shown in Fig. 1) in a CCTV system, and a large amount of manpower will be put into monitoring different monitor screens one by one. Therefore, if images photographed by different equipment can be stitched together (as shown in Fig. 2) for the convenience of monitoring, the manpower input can be reduced greatly.

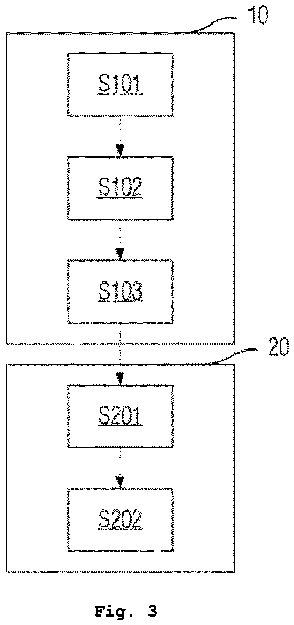

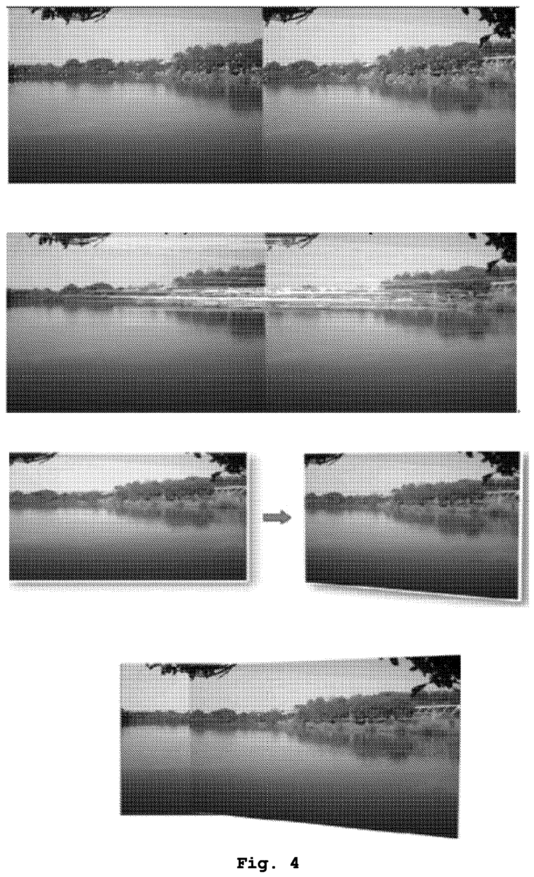

By using some of current image stitching methods, different pictures photographed by the same camera can be stitched together to form a complete picture having a larger field of view. However, these methods are usually time-consuming and cannot meet the requirements for real-time video stream processing. Fig. 3 shows the procedure of one prior image stitching method, and Fig. 4 shows the results of image processing in each step in each phase. The procedure mainly includes two phases: an image registration phase 10 and an image composition phase 20. The image registration phase 10 mainly includes step S101 feature point calculation, step S102 feature point matching and step S103 homography estimation, and the homography matrix obtained is used as a projection transformation parameter in the image composition phase. The image composition phase 202 mainly includes step S201 exposure estimation and step S202 picture blending, and the projection transformation parameter obtained in the image registration phase 10 is used to perform a projection transformation for the pictures to be stitched in picture blending. A large amount of calculations are required in the procedure shown in Fig. 3. Especially, the calculation complexity is the highest and the time required for calculations is the longest in the image registration phase 10. Therefore, the method cannot meet the requirements for real-time video stream processing.

### Summary of the Invention

Embodiments of the present invention provide an image stitching method, an image stitching apparatus and a computer-readable medium to improve current image stitching procedures, thus greatly reducing the calculation time to meet the requirements for real-time video stream processing.

In a first aspect, an image stitching method is provided, the method may be executed by an edge processing device connected with both a first camera and a second camera, and the method may comprise: acquiring the current frame of a first picture photographed by the first camera and the current frame of a second picture photographed by the second camera, wherein an overlap exists between photographed regions in the first picture and the second picture; determining whether a first condition is met, the first condition referring to: the relative position relationship between the first camera and the second camera remaining unchanged when the current frame and the previous frame of pictures are photographed; if the first condition is met, acquiring a first projection transformation parameter used when a projection transformation is performed for the previous frame of a third picture photographed by the first camera and a second projection transformation parameter used when a projection transformation is performed for the previous frame of a fourth picture photographed by the second camera; blending the first picture and the second picture, wherein the first projection transformation parameter is used to perform a projection transformation for the first picture and the second projection transformation parameter is used to perform a projection transformation for the second picture.

In a second aspect, an image stitching apparatus is provided, and the apparatus comprises the modules used to perform the steps of the method provided in the first aspect.

In a third aspect, an image stitching apparatus is provided and the apparatus comprises at least a memory, configured to store computer-readable codes, and at least a processor, configured to invoke the computer-readable codes to perform the steps of the method provided in the first aspect.

In a fifth aspect, a computer-readable medium is provided, computer-readable instructions are stored in the computer-readable medium, and a processor performs the steps of the method provided in the first aspect when the computer-readable instructions are executed by the processor.

With embodiments of the present invention adopted, when the position relationship between cameras remains unchanged, the projection transformation parameter of the previous frame may be reused. Thus, a delay caused by a second calculation is avoided and the calculation complexity is greatly reduced. For a target tracking scenario, pictures photographed by different cameras and having overlapped photographed regions may be stitched into a picture having a wider field of view, and the multi-camera tracking problem is converted into a relatively mature single-camera tracking problem to reduce the technical difficulty. In a CCTV system, pictures photographed by cameras in a group may be stitched together in real time to obtain a single stitched picture or video stream, and thus, the number of input channels and the workload of manual monitoring may be reduced.

For any of above-mentioned aspects, alternatively, whether a first condition is met is determined in the following way: if the positions of the first camera and the second camera remain unchanged when the current frame and the previous frame of pictures are photographed, the relative position relationship between the first camera and the second camera is determined to remain unchanged. A way of simply determining that the position relationship between cameras remains unchanged is provided.

When whether the first condition is met is determined, a first ratio of the number of feature points indicating that a gradient direction change happens to the first picture relative to the third picture to the number of all feature points may be determined; if the first ratio is smaller than a preset first ratio threshold, it is determined that the positions of the first camera remain unchanged when the current frame and the previous frame of pictures are photographed; a second ratio of the number of feature points indicating that a gradient direction change happens to the second picture relative to the fourth picture to the number of all feature points may be determined; if the second ratio is smaller than a preset second ratio threshold, it is determined that the positions of the second camera remain unchanged when the current frame and the previous frame of pictures are photographed. Or, a third ratio of the number of feature points indicating that the first picture moves relative to the third picture to the number of all feature points may be determined; if the third ratio is smaller than a preset third ratio threshold, it is determined that the positions of the first camera remain unchanged when the current frame and the previous frame of pictures are photographed; a fourth ratio of the number of feature points indicating that the second picture moves relative to the fourth picture to the number of all feature points may be determined; if the fourth ratio is smaller than a preset fourth ratio threshold, it is determined that the positions of the second camera remain unchanged when the current frame and the previous frame of pictures are photographed.

For any of the above-mentioned aspects, alternatively, whether a second condition is met may be further determined, and the second condition refers to: the brightness change of the first picture relative to the third picture being smaller than a preset first brightness change threshold and the brightness change of the second picture relative to the fourth picture being smaller than a preset second brightness change threshold; if the second condition is met, a first exposure compensation parameter used when an exposure compensation is provided for the third picture and a second exposure compensation parameter used when an exposure compensation is provided for the fourth picture are acquired; when the first picture and the second picture are blended, the first exposure compensation parameter is used to provide exposure compensation for the first picture and the second exposure compensation parameter is used to provide exposure compensation for the second picture. Wherein, when the exposure remains unchanged, the exposure compensation parameter for the previous frame may be reused to further reduce the time required for picture stitching.

For any of the above-mentioned aspects, alternatively, if the first condition is not met, a third projection transformation parameter required to be used for a projection transformation of the first picture and a fourth projection transformation parameter required to be used for a projection transformation of the second picture are calculated; when the first picture and the second picture are blended, the third projection transformation parameter may be used to perform a projection transformation for the first picture and the fourth projection transformation parameter may be used to perform a projection transformation for the second picture. Alternatively, if the second condition is not met, a third exposure compensation parameter required to be used for an exposure compensation for the first picture and a fourth exposure compensation parameter required to be used for an exposure compensation for the second picture are calculated; when the first picture and the second picture are blended, the third exposure compensation parameter may be used to provide an exposure compensation for the first picture, and the fourth exposure compensation parameter may be used to provide an exposure compensation for the second picture; wherein the step of calculating the third projection transformation parameter and the fourth projection transformation parameter and the step of calculating the third exposure compensation parameter and the fourth exposure compensation parameter are performed in parallel. In prior image stitching methods, the step of estimating exposure and the step of calculating projection transformation parameters are performed in series. However, the steps are performed in parallel in the present invention, and even if the parameter of the previous frame cannot be reused, the whole process of the execution of the image stitching method can also be shortened.

### Brief Description of the Drawings

Fig. 1 is a schematic diagram of a monitor wall in a CCTV system.
Fig. 2 is a schematic diagram of stitching of pictures photographed by different cameras.
Fig. 3 shows the procedure of one prior image stitching method.
Fig. 4 shows the picture obtained by using the image stitching method shown in Fig. 3.
Fig. 5 is a flowchart of the image stitching method provided by embodiments of the present invention.
Fig. 6 shows the connection relationship between cameras and an edge processing device when the image stitching method provided by embodiments of the present invention is adopted.
Fig. 7 shows the structure of the image stitching apparatus provided by embodiments of the present invention.
Fig. 8 is a schematic diagram of an application of embodiments of the present invention in a CCTV system.
Fig. 9 is a schematic diagram of an application of embodiments of the present invention in a traffic monitoring system.
Fig. 10A to Fig. 10C show deployment modes of cameras in embodiments of the present invention.

Description of reference numerals in the drawings:
10: Image registration phase
S101: Feature point calculation
S102: Feature point matching
S103: Homography estimation
20: Image composition phase
S201: Exposure estimation
S202: Picture blending
50: Image stitching method provided by embodiments of the present invention
S500-S507, S5071-S5073: Steps of the method
61, 62, ..., 6n: cameras
70: Edge processing device
7001: Memory
7002: Processor
701: Image stitching program
7011-7018: Program modules
7003: Communication module
80: Router
90: DVR

### Specific Embodiments

Now, the subject described in this document is discussed by reference to exemplary embodiments. It should be understood that the discussions about these embodiments are only intended to let those skilled in the art have a better understanding so as to realize the subject described in this document, but are not intended to restrict the scope of protection, applicability, or examples described in the claims. Changes may be made to the functions and arrangements of the discussed elements, without departing from the scope of protection of embodiments of the present invention. Various processes or components may be omitted, replaced, or added in different examples, as required. For example, the described method may be executed in a sequence different from what is described, and the steps may be added, omitted or combined. In addition, the features described in relation to some examples may also be combined in other examples.

As used in this document, the term "comprise" and its variants are open terms and mean "include but are not limited to". The term "on the basis of" means "at least partially on basis of". The terms "an embodiment" and "one embodiment" mean "at least one embodiment". The term "another embodiment" means "at least one other embodiment". The terms "first" and "second" may refer to different or identical objects. Other definitions, explicit or implicit, may be included below. Unless otherwise specified in the context, the definition of a term is consistent throughout the description.

As mentioned previously, the time required for the image registration phase is the longest because of high calculation complexity in a prior image stitching method. The table below compares calculation complexity in each phase of a prior image stitching method.

| | Input | Output | Calculation complexity |
|---|---|---|---|
| Image registration | A group of pictures | Projection transformation | High |
| | | parameter (for example, homography matrix) | |
| Exposure estimation | A group of pictures | Exposure compensation parameter (for example, exposure error) | Low |
| Picture blending | A group of pictures, projection transformation parameter and exposure compensation parameter | Picture after stitching | Medium |

Therefore, if the calculation complexity in the imaging registration phase can be reduced, the time required for the image registration phase can be reduced, and then the time required for the whole image stitching process can be shortened. In embodiments of the present invention, considering a scenario that the relative position relationship between the cameras remains unchanged when the previous frame and the current frame of pictures are photographed, then the angle of the same camera with respect to the photographed object does not change between the two frames of pictures, so it may be considered that the projection transformation parameter has not changed. In this case, the projection transformation parameter for the previous frame may be reused to process the current frame of picture, without the need to re-calculate the projection transformation parameter. Thus, the calculation complexity is greatly reduced and the processing delay is shortened. Embodiments of the present invention are described in detail below, wherein, for the clarity of description, the stitching of two pictures, for example, is given, and the principle of the stitching of a plurality of pictures is the same.

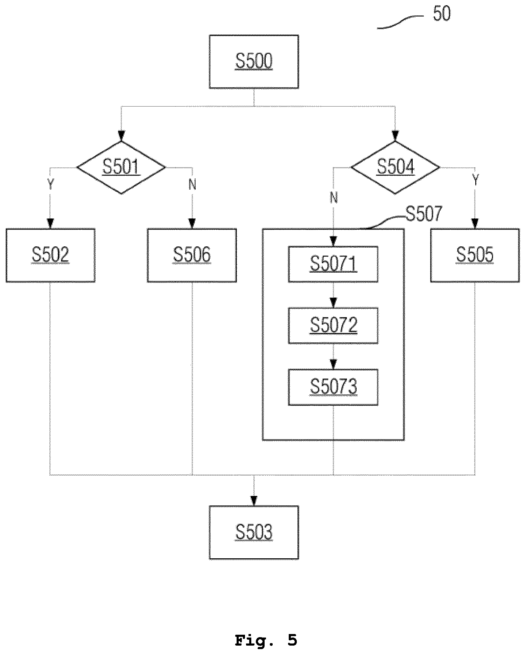

As shown in Fig. 5, the image stitching method 50 provided by embodiments of the present invention may comprise the following steps:
S500: Acquire the current frames of two pictures to be stitched: a first picture and a second picture.

Wherein, an overlap exists between photographed regions in the first picture and the second picture, the first picture is photographed by the first camera and the second picture is photographed by the second camera. For example, if the positions of two cameras both remain unchanged when pictures are continuously photographed and the fields of view of the two cameras overlap, it can be regarded as having an overlap between the photographed regions in the two pictures obtained when the two cameras photograph the same frame of picture.

S501: Determine whether the first condition is met. Wherein, the first condition refers to: the relative position relationship between the first camera and the second camera remaining unchanged when the current frame and the previous frame of pictures are photographed; if the first condition is met, perform step S502, and otherwise perform step S506.

Wherein, in step S501 of determining whether the first condition is met, consider that the relative position relationship between the first camera and the second camera may be determined to remain unchanged if the positions of the first camera and the second camera both remain unchanged when the current frame and the previous frame of pictures are photographed. A plurality of alternatives including alternative 1 and alternative 2 below may be adopted for a specific implementation.

### Alternative 1

A first ratio of the number of feature points indicating that a gradient direction change happens to the first picture relative to the third picture to the number of all feature points may be first determined. If the first ratio is smaller than a preset first ratio threshold, it is determined that the positions of the first camera remain unchanged when the current frame and the previous frame of pictures are photographed. Similarly, a second ratio of the number of feature points indicating that a gradient direction change happens to the second picture relative to the fourth picture to the number of all feature points may be determined. If the second ratio is smaller than a preset second ratio threshold, it is determined that the positions of the second camera remain unchanged when the current frame and the previous frame of pictures are photographed. Alternatively, the first ratio threshold and the second ratio threshold are equal. Specifically, in order to quickly and efficiently determine whether the positions of cameras are changed, for a video stream, feature points of the initial frame of picture of the video stream will be counted and the positions of these feature points will be recorded; each subsequent frame will be compared at these feature points to see whether a gradient direction change happens, and if the change falls within a preset range (for example, the first ratio of the number of feature points where a gradient change happens to the number of all feature points is smaller than a preset first ratio threshold), it is determined that no position change or rotation happens to the picture.

### Alternative 2

First, a third ratio of the number of feature points indicating that the first picture moves relative to the third picture to the number of all feature points is determined; if the third ratio is smaller than a preset third ratio threshold, it is determined that the positions of the first camera remain unchanged when the current frame and the previous frame of pictures are photographed. Similarly, a fourth ratio of the number of feature points indicating that the second picture moves relative to the fourth picture to the number of all feature points is determined; if the fourth ratio is smaller than a preset fourth ratio threshold, it is determined that the positions of the second camera remain unchanged when the current frame and the previous frame of pictures are photographed. Alternatively, the third ratio threshold and the fourth ratio threshold are equal.

S502: Acquire the projection transformation parameter (denoted by "first projection transformation parameter") used when a projection transformation is performed for the previous frame of picture (denoted by "third picture") photographed by the first camera and the projection transformation parameter (denoted by "second projection transformation parameter") used when a projection transformation is performed for the previous frame of picture (denoted by "fourth picture") photographed by the second camera. Here, a projection transformation parameter may be a homography matrix.

S506: Calculate a third projection transformation parameter required to be used for a projection transformation of the first picture and a fourth projection transformation parameter required to be used for a projection transformation of the second picture. Since the projection transformation parameter for the previous frame cannot be used, the projection transformation parameter for the current frame needs to be calculated again. Alternatively, an overlapped region between two pictures and the space mapping relationship between the pictures may be first found, and then the relationship between this group of pictures and the picture after stitching may be obtained. Feature points of each picture in this group of pictures are calculated respectively by using the methods including but not limited to: scale-invariant feature transform (SIFT), speed up robust feature (SURF) and oriented fast and rotated brief (ORB). These features points, independent of the size and the angle of pictures, may be used as reference points in pictures. Feature points of two pictures are matched to find an overlapped region between the pictures and a group of related points, and the related points are utilized to calculate a homography matrix between two pictures. The obtained homography matrix is used as a projection transformation parameter for a projection transformation. Wherein, homogeneity is a projection transformation, which is used in the projective geometry to describe a change of the position of an object when the angle of an observer is changed.

Alternatively, an exposure compensation is also required for picture blending. Therefore, alternatively, exposure compensation parameters may be obtained by performing the following steps:
S504: Determine whether a second condition is met. The second condition is used to determine whether the brightness change between two consecutive frames of pictures is small enough. If yes, the exposure compensation parameter for the previous frame of picture may be reused for the current frame. Specifically, the second condition may refer to: the brightness change of the first picture relative to the third picture being smaller than a preset first brightness change threshold and the brightness change of the second picture relative to the fourth picture being smaller than a preset second brightness change threshold. Alternatively, the first brightness change threshold and the second brightness change threshold are equal.

Specifically, similar to the determination of the first condition, the brightness of each frame of a video stream will be compared at previously recorded feature points. If a brightness change exceeds a threshold, it indicates that the exposure of the camera photographing the video stream has possibly been changed and the exposure compensation parameter needs to be estimated again.

If the second condition is met, perform step S505, and otherwise perform step S507.

S505: Acquire a first exposure compensation parameter used when an exposure compensation is provided for the previous frame of the third picture and a second exposure compensation parameter used when an exposure compensation is provided for the previous frame of the fourth picture.

S507: Calculate a third exposure compensation parameter required to be used for an exposure compensation of the first picture and a fourth exposure compensation parameter required to be used for an exposure compensation of the second picture. Since the exposure compensation parameter for the previous frame cannot be used, the exposure compensation parameter for the current frame needs to be calculated again.

After obtaining the projection transformation parameters and the exposure compensation parameters by performing the previous steps, then perform the step below to blend the first picture and the second picture.

S503: Blend the first picture and the second picture.

Wherein, the projection transformation parameters obtained previously are used to perform a projection transformation for the two pictures, respectively, and the exposure compensation parameters obtained previously are used to provide exposure compensation for the two pictures, respectively. Then, the first picture and the second picture for which a projection transformation and an exposure compensation have been performed are blended. The two pictures are stitched into a larger complete picture. Wherein, the multi-band blending method can be used for picture blending, and exposure compensation is an optional step.

In the previous process, as shown in Fig. 5, the steps of acquiring projection transformation parameters and acquiring exposure compensation parameters are performed in parallel. On the one hand, if the first condition is met, the projection transformation parameter for the previous frame can directly be used to process the current frame of picture. Since it is unnecessary to calculate the projection transformation parameter for the current frame in the whole image stitching process, the calculation complexity in the whole process is greatly reduced and the processing time is shortened. On the other hand, after researches and experiments on the projection transformation process and the exposure compensation process, the researchers of the present invention find that the calculation of the projection transformation parameters and the calculation of the exposure compensation parameters are relatively independent. Therefore, they creatively perform the two processes in parallel, that is, if the first condition is not met, the step of calculating the projection transformation parameters and the step of calculating the exposure compensation parameters can be performed in parallel. Compared with the serial processing in the prior image stitching methods, the image stitching method provided by embodiments of the present invention can also partially shorten the processing time of the whole image stitching process.

In a word, the image stitching method provided by embodiments of the present invention comprises three processing steps: image registration, exposure estimation and picture blending. Usually, the three steps need to be performed only for the first frame, and only picture blending is required subsequently. Calculations are required only when the position relationship between cameras and the exposure compensation parameters are changed.

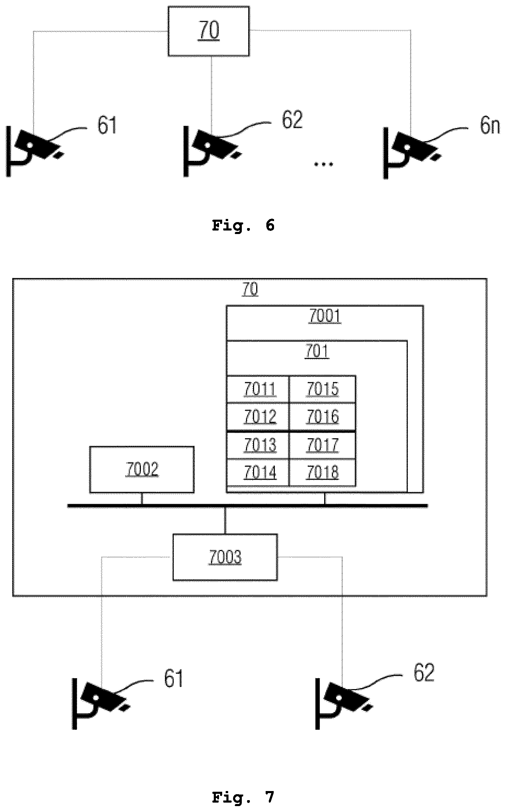

Experiments show that the image stitching method provided by embodiments of the present invention can improve the computing speed by 60 times in an ideal condition (that is to say, the position relationship between cameras and the exposure compensation parameters remain unchanged), compared with a traditional image stitching method. It takes only 30ms or a shorter time to run the image stitching method provided by embodiments of the present invention on an edge processing device. On the contrary, it takes about 2000ms to complete image stitching on the same edge processing device if a traditional image stitching method is adopted. In an optional implementation mode shown in Fig. 6, cameras 61, 62, ..., 6n are all connected with an edge processing device 70, cameras photograph pictures and send the pictures to the edge processing device 70, and the edge processing device 70 executes the above-mentioned image stitching method 50 to stitch the pictures from the cameras.

It should be noted that two cameras exemplified in the above-mentioned method and pictures photographed by more cameras may be stitched together in practical applications. The principle is the same as that of the above-mentioned method and will not be described here again.

The method provided by embodiments of the present invention can be applied to various scenarios where image stitching is required. The scenarios the method is applied to are respectively described below.

### 1. Multi-target multi-camera (MTMC) tracking

The technical difficulty of an MTMC system lies in how to find the same target from different camera visions. Because of different photographing angles and different camera parameters, features of a target obtained by using different cameras to photograph the target are different. However, the technique of tracking multiple targets in pictures photographed by a camera is relatively mature. The image stitching method 50 provided by embodiments of the present invention realizes real-time image stitching. Pictures photographed by a plurality of cameras in the same place are stitched and the field of view of cameras is extended. In this way, the technical difficulty in target tracking by cameras is overcome. As shown in Fig. 2, by using the image stitching method 50 provided by embodiments of the present invention, pictures photographed by different cameras and having a certain field of view and overlapped regions can be stitched into a picture having a wider field of view, and then the video consisting of frames of pictures acquired in real time forms a video having a wider field of view. By reasonably setting positions of cameras, a whole monitored area can be covered. Thus, the multi-camera tracking problem is converted into a technically mature single-camera tracking problem.

### 2. CCTV system

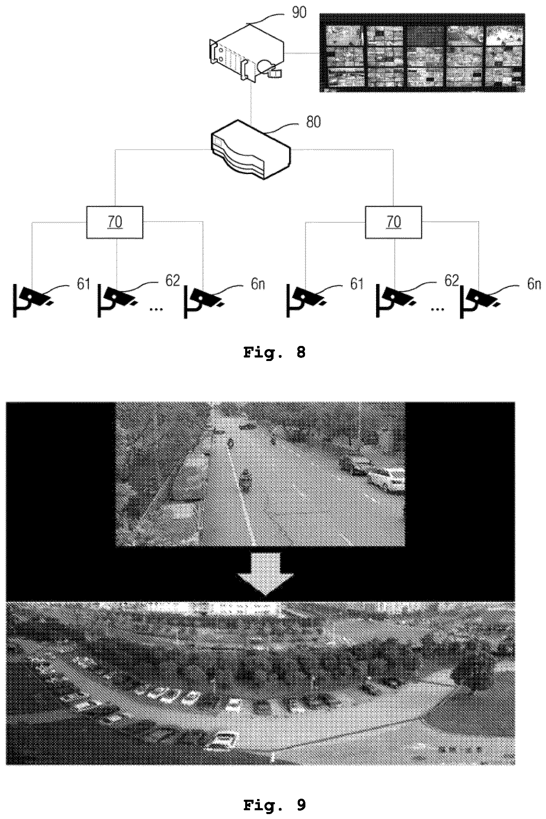

By adopting the image stitching method 50 provided by embodiments of the present invention, pictures photographed by cameras in adjacent regions can be stitched together. Specifically, monitoring cameras can be grouped by region, regions monitored by cameras in a group are adjacent and an overlap exists between adjacent regions. Pictures photographed by cameras in a group are stitched together in real time to obtain more natural pictures or video data streams after stitching. As shown in Fig. 8, cameras 61, 62, ..., 6n are connected to an edge processing device 70, the edge processing device 70 can directly acquire the video stream of each camera, and stitch a plurality of video streams into one video stream after picture stitching. The video stream after stitching can be sent a router 80 and a digital video recorder (DVR) 90 (through a gateway), and the DVR 90 finally presents the video stream to the user or the video stream is displayed on a monitor wall. On the one hand, the number of input channels can be reduced; in addition, the space position relationships between cameras are integrated and regions photographed by a plurality of cameras are integrated into a complete region, and the method is applicable to a target identification and tracking system. On the other hand, the workload of manual monitoring will also be greatly reduced.

### 3. Traffic monitoring

As shown in Fig. 9, in order to monitor a section of a road and realize the monitoring coverage of the section of the road, it is necessary to deploy a large number of cameras along the road, wherein each camera can monitor only a small part of the section of the road. For example, in order to detect a parked vehicle, pictures of the vehicle may be acquired from a plurality of angles to realize a vehicle identification and capture the license plate. By adopting the image stitching method 50 provided by embodiments of the present invention, on the one hand, photographing from different angles can more efficiently take a snapshot of the license plate of a vehicle and reduce the difficulty of vehicle detection; on the other hand, stitching between pictures photographed by a plurality of cameras can convert the multi-camera target tracking problem into a single-camera target tracking problem, greatly reducing the technical difficulty and calculation complexity of vehicle tracking.

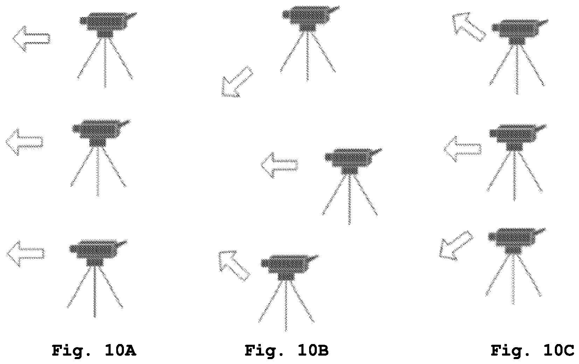

By using the method provided by embodiments of the present invention, pictures are stitched and blended, cameras are integrated into groups, different types of cameras having different fields of view are compatible, and a monitoring effect that a traditional camera cannot achieve can be realized in the previously mentioned MTMC system, CCTV system, traffic monitoring system or other systems requiring video monitoring. As shown in Fig. 10A, 10B and 10C, cameras can be deployed in different ways to meet the requirements in different application scenarios.

For example, as shown in Fig. 10A, co-directional cameras may be deployed in a horizontal direction or in a vertical direction or in both directions to extend the width and height of monitoring pictures to realize the control over a larger field of view.

For example again, in a scenario where a block or blind spot exists in the field of view, the mode shown in Fig. 6B can be adopted to control a monitored area and alleviate the influence of blind spots and dead zones.

For example again, the mode shown in Fig. 6C can be adopted to realize the same functions of a panoramic or wide-angle camera. The field of view can be achieved by merging existing cameras according to the actual requirements.

In practical applications of the image stitching method 50 provided by embodiments of the present invention, the angles and directions of cameras can flexibly be adjusted according to the actual requirements, as long as an overlap exists between regions photographed by cameras in a group. Video pictures having different angles are stitched together. The shape of pictures after stitching depends on the field of view of the combined cameras and monitoring pictures having special shapes can be produced. By using existing cameras, the functions of a wide-angle camera or even a panoramic camera can be achieved, and in addition, cameras can be deployed flexibly at an expected angle, instead of a fixed angle.

The angles of cameras in most current systems are not fixed, and different numbers of cameras need to be used in different application scenarios. The more cameras are deployed, the more pictures need to be monitored. However, the adoption of the image stitching method 50 provided by embodiments of the present invention can realize the integration of video streams to improve the flexibility of the application. By deploying software or application which can realize the image stitching method, the current "one camera one screen" mode can be converted into a "multi-camera one screen" mode.

Embodiments of the present invention further provide an image stitching apparatus 70, which can execute the previously-mentioned image stitching method 50. The image stitching apparatus 70 may be implemented as a computer processor network to perform processing on the side of the image stitching apparatus 70 in the image stitching method 50 provided by embodiments of the present invention. The image stitching apparatus 70 may also be a single computer, a single-chip microcomputer or a processing chip as shown in Figure 3, and may be deployed in the previously-mentioned edge processing device 70. The image stitching apparatus 70 may comprise at least a memory 7001, which includes a computer-readable medium, for example, a random access memory (RAM). The image stitching apparatus 70 further comprises at least a processor 7002 coupled with at least a memory 7001. Computer-executable instructions are stored in at least a memory 7001 and allow at least a processor 7002 to perform the steps described in this document when executed by at least a processor 7002.

At least a memory 7001 shown in Fig. 3 may contain an image stitching program 701 to allow at least a processor 7002 to perform the processing on the side of the image stitching apparatus 70 in the image stitching method 50 provided by embodiments of the present invention. The image stitching program 701 may comprise:
- an image acquisition module 7011, configured to acquire the current frame of a first picture photographed by a first camera and the current frame of a second picture photographed by a second camera, wherein an overlap exists between photographed regions in the first picture and the second picture;
- a first determination module 7012, configured to determine whether a first condition is met, the first condition referring to: the relative position relationship between the first camera and the second camera remaining unchanged when the current frame and the previous frame of pictures are photographed;
- a first parameter acquisition module 7013, configured to acquire a first projection transformation parameter used when a projection transformation is performed for the previous frame of a third picture photographed by the first camera and a second projection transformation parameter used when a projection transformation is performed for the previous frame of a fourth picture photographed by the second camera if the first condition is met;
- an image processing module 7014, configured to blend the first picture and the second picture, wherein the first projection transformation parameter is used to perform a projection transformation for the first picture and the second projection transformation parameter is used to perform a projection transformation for the second picture.

Alternatively, the first determination module 7012 is specifically configured to determine that the relative position relationship between the first camera and the second camera remains unchanged if the positions of the first camera and the second camera both remain unchanged when the current frame and the previous frame of pictures are photographed.

Alternatively, the first determination module 7012 is specifically configured to determine a first ratio of the number of feature points indicating that a gradient direction change happens to the first picture relative to the third picture to the number of all feature points, determine that the positions of the first camera remain unchanged when the current frame and the previous frame of pictures are photographed if the first ratio is smaller than a preset first ratio threshold, determine a second ratio of the number of feature points indicating that a gradient direction change happens to the second picture relative to the fourth picture to the number of all feature points, and determine that the positions of the second camera remain unchanged when the current frame and the previous frame of pictures are photographed if the second ratio is smaller than a preset second ratio threshold.

Alternatively, the first determination module 7012 is specifically configured to determine a third ratio of the number of feature points indicating that the first picture moves relative to the third picture to the number of all feature points, determine that the positions of the first camera remain unchanged when the current frame and the previous frame of pictures are photographed if the third ratio is smaller than a preset third ratio threshold, determine a fourth ratio of the number of feature points indicating that the second picture moves relative to the fourth picture to the number of all feature points may be determined, and determine that the positions of the second camera remain unchanged when the current frame and the previous frame of pictures are photographed if the fourth ratio is smaller than a preset fourth ratio threshold.

Alternatively, the image stitching apparatus 70 further comprises a second determination module 7015, configured to determine whether a second condition is met, the second condition referring to: the brightness change of the first picture relative to the third picture being smaller than a preset first brightness change threshold and the brightness change of the second picture relative to the fourth picture being smaller than a preset second brightness change threshold, and a second parameter acquisition module 7016, configured to acquire a first exposure compensation parameter used when an exposure compensation is provided for the third picture and a second exposure compensation parameter used when an exposure compensation is provided for the fourth picture if the second condition is met. In this case, the image processing module 7014 is specifically configured to blend the first picture and the second picture, wherein the first exposure compensation parameter is used to provide an exposure compensation for the first picture and the second exposure compensation parameter is used to provide an exposure compensation for the second picture.

Alternatively, the image stitching apparatus 70 further comprises a first parameter calculation module 7017, configured to calculate a third projection transformation parameter required to be used for a projection transformation of the first picture and a fourth projection transformation parameter required to be used for a projection transformation of the second picture if the first condition is not met, and the image processing module 7014, specifically configured to blend the first picture and the second picture, wherein the third projection transformation parameter is used to perform a projection transformation for the first picture and the fourth projection transformation parameter is used to perform a projection transformation for the second picture; the image stitching apparatus 70 further comprises a second parameter calculation module 7018, configured to calculate a third exposure compensation parameter required to be used for an exposure compensation of the first picture and a fourth exposure compensation parameter required to be used for an exposure compensation of the second picture if the second condition is not met, and the image processing module 7014, specifically configured to blend the first picture and the second picture, wherein the third exposure compensation parameter is used to provide an exposure compensation for the first picture and the fourth exposure compensation parameter is used to provide an exposure compensation for the second picture; wherein the operation of the first parameter calculation module 7017 calculating the third projection transformation parameter and the fourth projection transformation parameter and the operation of the second parameter calculation module 7018 calculating the third exposure compensation parameter and the fourth exposure compensation parameter are performed in parallel.

In addition, the above-mentioned modules can also be considered as functional modules realized by hardware and are used to realize the functions involved when the image stitching apparatus 70 executes the image stitching method. For example, the control logics of various processes involved in the image stitching method are burned into field programmable gate array (FPGA) chips or complex programmable logic devices (CPLDs) in advance, and then these chips or devices execute the functions of the above-mentioned modules. The particular realization mode depends on the engineering practice.

In addition, the image stitching apparatus 70 may further comprise a communication module 7003, configured for communication between the image stitching apparatus 70 and other devices, for example, cameras.

It should be noted that embodiments of the present invention may comprise apparatuses having a structure different from what is shown in Fig. 7. The above-mentioned structure is only exemplary and is used to explain the image stitching method 50 provided by embodiments of the present invention.

At least a processor 7002 may include a micro-processor, an application specific integrated circuit (ASIC), a digital signal processor (DSP), a central processing unit (CPU), a graphics processing unit (GPU) and a state machine. Embodiments of the computer-readable medium include but are not limited to floppy disks, CD-ROM, disks, memory chips, ROMs, RAMs, ASICs, configured processors, all-optical media, all magnetic tapes or other magnetic media, and any other medium from which a computer processor can read instructions. In addition, computer-readable media in other forms, which can send or carry instructions to a computer, include routers, private or public networks, or other wired and wireless transmission equipment or channels. Instructions may include codes in any computer programming language, including C, C++, C language, VisualBasic, java and JavaScript.

In addition, embodiments of the present invention further provide a computer-readable medium. Computer-readable instructions are stored in the computer-readable medium and a processor executes the above-mentioned image stitching method when the computer-readable instructions are executed by the processor. Embodiments of the computer-readable medium include a floppy disk, a hard disk, a magneto-optical disk, a compact disk (for example, compact disk read-only memory (CD-ROM), compact disk-recordable (CD-R), compact disk-rewritable (CD-RW), digital video disk-read only memory (DVD-ROM), digital versatile disk-random access memory (DVD-RAM), digital versatile disk-recordable (DVD-RW), digital versatile disk-rewritable (DVD+RW)), a magnetic tape, a nonvolatile memory card, and a read-only memory (ROM). Alternatively, computer-readable instructions can be downloaded from a server computer or cloud over a communication network.

It should be noted that not all steps in the above-mentioned flowcharts or modules in system structure diagrams are required, and some steps or modules may be omitted, depending on the actual requirements. The execution sequence of the steps is not fixed and may be adjusted as required. The system structures described in the above-mentioned embodiments may be physical structures or logical structures. That is to say, some modules may be realized by a physical entity, or some modules may be realized by a plurality of physical entities or may jointly be realized by some components in a plurality of self-contained devices.

## Claims

1. An image stitching method (50), **characterized in that** the method comprises:
- acquiring (S500) a current frame of a first picture photographed by a first camera and a current frame of a second picture photographed by a second camera, wherein an overlap exists between photographed regions in the first picture and the second picture;
- determining (S501) whether a first condition is met, the first condition comprising: the relative position relationship between the first camera and the second camera remaining unchanged when the current frame and the previous frame of pictures are photographed;
- if the first condition is met, acquiring (S502) a first projection transformation parameter used when a projection transformation is performed for the previous frame of a third picture photographed by the first camera and a second projection transformation parameter used when a projection transformation is performed for the previous frame of a fourth picture photographed by the second camera;
- blending (S503) the first picture and the second picture, wherein the first projection transformation parameter is used to perform a projection transformation for the first picture and the second projection transformation parameter is used to perform a projection transformation for the second picture.

2. The method according to claim 1, **characterized in that** said determining (S501) whether a first condition is met comprises: if positions of the first camera and the second camera both remain unchanged when the current frame and the previous frame of pictures are photographed, determining that the relative position relationship between the first camera and the second camera remains unchanged.

3. The method according to claim 2, **characterized in that** said determining (S501) whether a first condition is met comprises:
- determining a first ratio of the number of feature points indicating that a gradient direction change happens to the first picture relative to the third picture to the number of all feature points;
- if the first ratio is smaller than a preset first ratio threshold, determining that the positions of the first camera remain unchanged when the current frame and the previous frame of pictures are photographed;
- determining a second ratio of the number of feature points indicating that a gradient direction change happens to the second picture relative to the fourth picture to the number of all feature points;
- if the second ratio is smaller than a preset second ratio threshold, determining that the positions of the second camera remain unchanged when the current frame and the previous frame of pictures are photographed.

4. The method according to claim 2, **characterized in that** said determining (S501) whether a first condition is met comprises:
- determining a third ratio of the number of feature points indicating that the first picture moves relative to the third picture to the number of all feature points;
- if the third ratio is smaller than a preset third ratio threshold, determining that the positions of the first camera remain unchanged when the current frame and the previous frame of pictures are photographed;
- determining a fourth ratio of the number of feature points indicating that the second picture moves relative to the fourth picture to the number of all feature points;
- if the fourth ratio is smaller than a preset fourth ratio threshold, determining that the positions of the second camera remain unchanged when the current frame and the previous frame of pictures are photographed.

5. The method according to claim 1, **characterized in that**
- the method further comprises:
- determining (S504) whether a second condition is met, the second condition comprising: the brightness change of the first picture relative to the third picture being smaller than a preset first brightness change threshold and the brightness change of the second picture relative to the fourth picture being smaller than a preset second brightness change threshold;
- if the second condition is met, acquiring (S505) a first exposure compensation parameter used when an exposure compensation is provided for the third picture and a second exposure compensation parameter used when an exposure compensation is provided for the fourth picture;
- blending (S503) the first picture and the second picture comprises:
- blending the first picture and the second picture, wherein the first exposure compensation parameter is used to provide an exposure compensation for the first picture and the second exposure compensation parameter is used to provide an exposure compensation for the second picture.

6. The method according to claim 5, **characterized in that** the method further comprises:
if the first condition is not met, calculating (S506) a third projection transformation parameter required to be used for a projection transformation of the first picture and a fourth projection transformation parameter required to be used for a projection transformation of the second picture; blending (S503) the first picture and the second picture, wherein the third projection transformation parameter is used to perform a projection transformation for the first picture and the fourth projection transformation parameter is used to perform a projection transformation for the second picture;
if the second condition is not met, calculating (S507) a third exposure compensation parameter required to be used for an exposure compensation of the first picture and a fourth exposure compensation parameter required to be used for an exposure compensation of the second picture; blending (S503) the first picture and the second picture, wherein the third exposure compensation parameter is used to provide an exposure compensation for the first picture and the fourth exposure compensation parameter is used to provide an exposure compensation for the second picture;
wherein, the step of calculating (S506) the third projection transformation parameter and the fourth projection transformation parameter and the step of calculating (S507) the third exposure compensation parameter and the fourth exposure compensation parameter are performed in parallel.

7. The method according to claim 1, **characterized in that**
the first camera and the second camera are cameras in a CCTV system, and the method is executed by an edge processing device connected with both the first camera and the second camera; or
the first camera and the second camera are cameras in a roadside parking system, and the method is executed by an edge processing device connected with both the first camera and the second camera.

8. An image stitching apparatus (70), **characterized in that** the apparatus comprises:
- an image acquisition module (7011), configured to acquire the current frame of a first picture photographed by a first camera and the current frame of a second picture photographed by a second camera, wherein an overlap exists between photographed regions in the first picture and the second picture;
- a first determination module (7012), configured to determine whether a first condition is met, the first condition referring to: the relative position relationship between the first camera and the second camera remaining unchanged when the current frame and the previous frame of pictures are photographed;
- a first parameter acquisition module (7013), configured to acquire a first projection transformation parameter used when a projection transformation is performed for the previous frame of a third picture photographed by the first camera and a second projection transformation parameter used when a projection transformation is performed for the previous frame of a fourth picture photographed by the second camera if the first condition is met;
- an image processing module (7014), configured to blend the first picture and the second picture, wherein the first projection transformation parameter is used to perform a projection transformation for the first picture and the second projection transformation parameter is used to perform a projection transformation for the second picture.

9. The apparatus according to claim 8, **characterized in that** the first determination module (7012) is specifically configured to determine that the relative position relationship between the first camera and the second camera remains unchanged if the positions of the first camera and the second camera both remain unchanged when the current frame and the previous frame of pictures are photographed.

10. The apparatus according to claim 9, **characterized in that** the first determination module (7012) is specifically configured to:
- determine a first ratio of the number of feature points indicating that a gradient direction change happens to the first picture relative to the third picture to the number of all feature points;
- determine that the positions of the first camera remain unchanged when the current frame and the previous frame of pictures are photographed if the first ratio is smaller than a preset first ratio threshold;
- determine a second ratio of the number of feature points indicating that a gradient direction change happens to the second picture relative to the fourth picture to the number of all feature points;
- determine that the positions of the second camera remain unchanged when the current frame and the previous frame of pictures are photographed if the second ratio is smaller than a preset second ratio threshold.

11. The apparatus according to claim 9, **characterized in that** the first determination module (7012) is specifically configured to:
- determine a third ratio of the number of feature points indicating that the first picture moves relative to the third picture to the number of all feature points;
- determine that the positions of the first camera remain unchanged when the current frame and the previous frame of pictures are photographed if the third ratio is smaller than a preset third ratio threshold;
- determine a fourth ratio of the number of feature points indicating that the second picture moves relative to the fourth picture to the number of all feature points;
- determine that the positions of the second camera remain unchanged when the current frame and the previous frame of pictures are photographed if the fourth ratio is smaller than a preset fourth ratio threshold.

12. The apparatus according to claim 8, **characterized in that**
- the apparatus further comprises:
- a second determination module (7015), configured to determine whether a second condition is met, the second condition referring to: the brightness change of the first picture relative to the third picture being smaller than a preset first brightness change threshold and the brightness change of the second picture relative to the fourth picture being smaller than a preset second brightness change threshold;
- a second parameter acquisition module (7016), configured to acquire a first exposure compensation parameter used when an exposure compensation is provided for the third picture and a second exposure compensation parameter used when an exposure compensation is provided for the fourth picture if the second condition is met;
- the image processing module (7014), configured to blend the first picture and the second picture, wherein the first exposure compensation parameter is used to provide an exposure compensation for the first picture and the second exposure compensation parameter is used to provide an exposure compensation for the second picture.

13. The apparatus according to claim 12, **characterized in that**
the apparatus further comprises a first parameter calculation module (7017), configured to calculate a third projection transformation parameter required to be used for a projection transformation of the first picture and a fourth projection transformation parameter required to be used for a projection transformation of the second picture if the first condition is not met; the image processing module (7014), specifically configured to blend the first picture and the second picture, wherein the third projection transformation parameter is used to perform a projection transformation for the first picture and the fourth projection transformation parameter is used to perform a projection transformation for the second picture;
the apparatus further comprises a second parameter calculation module (7018), configured to calculate a third exposure compensation parameter required to be used for an exposure compensation of the first picture and a fourth exposure compensation parameter required to be used for an exposure compensation of the second picture if the second condition is not met; the image processing module (7014), specifically configured to blend the first picture and the second picture, wherein the third exposure compensation parameter is used to provide an exposure compensation for the first picture and the fourth exposure compensation parameter is used to provide an exposure compensation for the second picture;
wherein, the operation of the first parameter calculation module (7017) calculating the third projection transformation parameter and the fourth projection transformation parameter and the operation of the second parameter calculation module (7018) calculating the third exposure compensation parameter and the fourth exposure compensation parameter are performed in parallel.

14. The apparatus according to claim 8, **characterized in that**
the first camera and the second camera are cameras in a CCTV system and the method is executed by an edge processing device connected with both the first camera and the second camera; or the first camera and the second camera are cameras in a roadside parking system and the method is executed by an edge processing device connected with both the first camera and the second camera.

15. An image stitching apparatus (70), **characterized in that** the apparatus comprises:
at least a memory (7001), configured to store computer-readable codes;
at least a processor (7002), configured to invoke the computer-readable codes to execute the method as claimed in any of claims 1 to 7.

16. A computer-readable medium, **characterized in that** computer-readable instructions are stored in the computer-readable medium and a processor executes the method as claimed in any of claims 1 to 7 when the computer-readable instructions are executed by the processor.
